# EUROPEAN PATENT SPECIFICATION

(11) **EP 1 781 120 B1**
(45) Date of publication and mention of the grant of the patent: **04.09.2013**
(21) Application number: 05764960.0
(22) Date of filing: 16.06.2005
(51) Int. Cl.: A23N 7/02, A47J 17/18

(54) **APPARATUS FOR PEELING OFF**
SCHÄLVORRICHTUNG
APPAREIL D'ÉPLUCHAGE

(30) Priority: 18.06.2004 KR 2004045537
(43) Date of publication of application: 09.05.2007
(73) Proprietor: Choi, Byung-Kug, Kyunggi-do, Suwon 442-152 (KR)
(72) Inventor: Choi, Byung-Kug, Kyunggi-do, Suwon 442-152 (KR)
(74) Representative: Hübner, Gerd
(86) International application number: PCT/KR2005/001852
(87) International publication number: WO 2005/122801

(56) References cited:
- WO-A2-02/087363
- CH-A- 299 313
- CH-A- 407 632
- DE-A1- 2 244 786
- FR-A1- 2 618 998
- JP-A- 56 039 772
- KR-U- 960 000 134
- US-A- 3 931 900
- US-A- 5 065 672
- US-A- 5 662 034
- US-A- 5 780 088

## Description

### [Technical Field]

The present invention is related to an apparatus for peeling off, and in particular, is related to an apparatus for peeling off which can peel off a number of potatoes, vegetables and fruits automatically.

### [Background Art]

Since the potatoes used in various kinds of cuisines have many diverse shapes and irregularities, there was a problem that it was not possible to peel off or clean the potatoes if a person does not peel off the potatoes one by one.

Therefore, many apparatuses have been developed in order to solve this problem, but since these apparatuses peel off the shells of a potato with only a strong brush, there was also a problem as follows. That is, the brush is liable to be damaged due to the rough surfaces of a potato and the small stones or soils stucked in the brush are vulnerable to be stucked into a potato during peeling off.

Further, an apparatus for peeling off a potato by rotating a rough stone plate arranged on the lower part and the wall surface was developed, but the surface of a potato became rough, and thereby a potato was damaged easily, and an unsanitary result was obtained.

From US-3,931,900 a peeler and grater apparatus is known, which comprises a knife-bearing peeler disk rotaring at the bottom of a water tank.

Accordingly, until now there is a problem that a person has no choice but to peel off a potato one by one with only hands, thereby requiring much costs and time, and consequently, it is not possible to peel off in a large quantity.

The object of the present invention is to solve the above-mentioned problems, and in particular to provide an apparatus for peeling off which can peel off a number of potatoes, vegetables and fruits in a very short time without peeling off potatoes one by one with hands.

### [Disclosure of the Invention]

In order to accomplish the above-mentioned object, an apparatus for peeling off potatoes according to the present invention is composed of an opening through which water is introduced; a cylinder including a plurality of blades for peeling off attached in a row on the inner side of it; a rotating bottom plate which includes opposing convex portions formed on a part around an axis, and a projection rotatively installed on the surface of the bottom plate; a motor mounted on the lower part of the rotating bottom plate for rotating the rotating bottom plate forwardly and inversely; an outlet connected to the cylinder for discharging the remaining water and shells after peeling off; and a discharge opening for pulling out remaining materials in the cylinder, wherein if a motor is operated after pouring the water and the materials into the cylinder, the water and the materials are rotated along the circumference of the cylinder according to the rotations of the rotating bottom plate.

During the rotation of the water and the materials, the blades and the materials are contacted and thereby, the shells are peeled off.

### [Brief Description of the Drawings]

FIG. 1 is a slant diagram showing an exterior of an apparatus for peeling off potatoes according to the present invention.
FIG. 2 is a diagram showing a rotating bottom plate of an apparatus for peeling off potatoes according to the present invention in detail.
FIG. 3 is a diagram enlarging A section of an apparatus for peeling off potatoes of FIG. 1., and in particular showing a mounted blade in detail.

### [Embodiment of the Invention]

Next, one embodiment according to the present invention will be explained in detail with referring to the attached drawings.

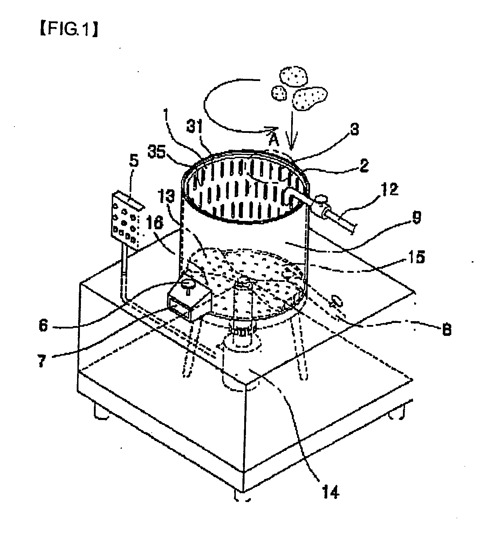

As is shown in FIG. 1, an apparatus for peeling off potatoes according to the present invention is composed of an inlet pipe(12) through which the water is introduced to an outer cylinder(9) of a large round pipe, a cylinder(1) including a plurality of blades for peeling off attached in a row on the inner side of it, a rotating bottom plate(15) arranged on the bottom of the outer cylinder, a motor(14) for rotating the rotating bottom plate, a control panel(5), an outlet(8) through which the water is discharged, and a discharge opening(7).

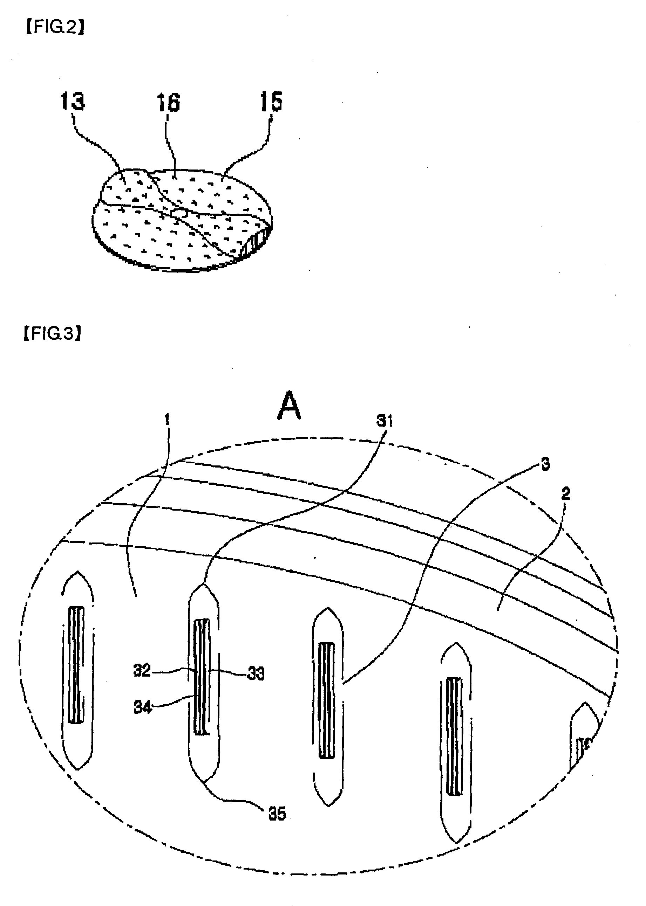

FIG. 3 is a diagram enlarging A section of an apparatus for peeling off potatoes of FIG. 1, and in particular, showing a mounted blade in detail.

In the present embodiment, an operation is started after a potato is inputted into an apparatus for peeling off.

As is shown in FIG 3, the blades(3) formed in a long shape are mounted in a row in a length direction along the wall surface cylinder. The upper part(31) and the lower part(35) of the blades(3) are all pointed, and the blades of both sides are formed so that they are slightly different from the entire rotation angle in a middle part. Besides, the waster is introduced and discharged through a long opening(32, 33) formed in the left and right side. The shells of a rotated potato are peeled off while the potato is being hit against the blades. For example, approximately 50 -360 blades are attached.

A motor(14) is mounted on the lower part of the rotating bottom plate(15) for rotating the rotating bottom plate forwardly and inversely.

A rotating bottom plate(15) is made of a silicon rubber. As is shown in FIG. 2, the rotating bottom plate(15) provided with a convex portion(13) changes the surface to be peeled off of a rotated potato. The convex portion has a convex circumference and a taper shape which is getting thinner and thinner toward an axis.

The rotating bottom plate(15) includes uneven projections. These projections(16) disperses a rotation powder of the water while facilitating their own rotations.

When the rotation direction of the water is changed from a forward direction to an inverse direction and vice versa, the surface of a potato is slightly peeled off by changing the surface to peeled off of a potato which is popped up from the water while flowing the water inversely, and thus the entire surfaces are peeled off uniformly.

A control panel(5) sets a rotation time of a rotation motor(14) or the time between a forward rotation and inverse rotation

Since the surface conditions are different according to the storage period, and the shells are getting thicker and thicker as the storage period is getting longer, the rotation time is determined based upon the surface conditions of the supplied potatoes

An outlet(8) discharges the water and the remnants of a peeled potato after the completion of peeling off.

Further, the peeled potato is discharged automatically by opening the outlet(7) and then, rotating the rotating bottom plate(15).

Next, an apparatus for peeling off potatoes according to the present invention will be explained in detail.

In an apparatus for peeling off potatoes according to the present invention, the water is introduced through an inlet pipe(12), an adequate amount of potatoes are poured into the wall surface cylinder and the operations are performed by setting the control panel(5).

Here, the control panel(5) controls the amount of water, the operation time and the left and right rotation time according to the sizes and the amount of potatoes.

If the operation of an apparatus for peeling off, the rotation bottom plate is rotated, and the potatoes and water put into the cylinder are rotated together according to the rotation of the rotation bottom plate.

The shells of the potatoes are peeled off while rotated potatoes and water are being kept in touch with the blades for peeling off.

At this time, according to the setting of the control panel(5), the motor(14) is rotated and the rotation power is transmitted to the rotation bottom plate(15), and thereby the rotation bottom plate(15) is rotated.

If the rotation bottom plate is rotated in only one direction, only one surface of a potato is peeled off. Therefore, in order to solve this problem, the rotation bottom plate is rotated forwardly and inversely at every interval of 5-20 seconds based upon the conditions of a potato. In case of changing from the forward rotation to inverse rotation and vice versa, the rotation bottom plate is stopped for about 1 - 3 second.

Here, it is to be noted that the water and the potatoes are mixed at an appropriate proportion and the rotation bottom plate must be rotated according to a suitable speed and revolutions per minute(RPM).

For example, it is preferable that the potatoes of 40 - 50Kg and the water of 50 - 60kg are mixed, and the 130-170 RPM is employed for the rotation bottom plate.

Consequently, the potatoes and the water are hit against the convex portion(13) of the rotation bottom plate(15) while they are being rotated. The potatoes which are submerged at the stopping time for changing the rotation direction are popped up by the rotation power again. Then, they started to be rotated after the opposing surface of a potato against the wall surface side is changed, thereby the entire surfaces of a potato are peeled off uniformly.

It takes about 3-4 minutes to peel off a potato completely, and after the completion of peeling off, the water and the dregs of a potato are discharged through an outlet, and the peeled potatoes are discharged through a discharge opening.

In the above embodiment, an example in which a potato is put into an apparatus for peeling off and the peeling off operation is performed is explained. But it goes without saying that it is also possible to put other vegetables, fruits such as a pear, an apple and a persimmon which have a round shape and hardness like a potato, into an apparatus for peeling off and to peel off.

### [Possibility of the industrial Application]

An apparatus for peeling off according to the present invention can peel off a potato by performing above-mentioned operations based upon the size of the potato and the introduced amount of the water. It is possible to solve the problem that much shells are remained because of the properties of a potato in the prior art, the inconvenience that the users had to peel off the potatoes one by one with hands, and the problem that in case of small potatoes which are gaining popularity recently, the users can eat them after cleaning them. Therefore, many economic effects will be expected in the future.

The present invention is not limited to this embodiment, and it is to be noted that it is possible to change the invention by a person having ordinary skill in the art to which the invention pertains without deviating from the scope of the present invention.

Thus, the scope of the rights claimed by the present invention is not limited to the scope of the specification but limited to the claims described later.

## Claims

1. An apparatus for peeling off, comprising,
an opening through which water is introduced,
a cylinder including a plurality of blades for peeling off attached in a row on the inner side of it,
a rotating bottom plate which is arranged on the cylinder, and which includes opposing convex portions formed on a part around an axis, and a projection rotatively installed on the surface of the bottom plate,
a motor mounted on the lower part of the rotating bottom plate for rotating the rotating bottom plate forwardly and inversely,
an outlet connected to the cylinder for discharging the remaining water and shells after peeling off,
and a discharge opening for pulling out remaining materials in the cylinder,
wherein if a motor is operated after the water and the materials are put into the cylinder, the water and the materials are rotated along the circumference of the cylinder according to the rotations of the rotating bottom plate, and during the rotation of the water and the materials, the blades and the materials are contacted and thereby, the shells are peeled off.

2. An apparatus for peeling off set forth in the claim 1, further comprising,
a control panel for controlling the operation conditions including at least a rotation time, and the time interval between forward rotation and inverse rotation of said motor.

3. An apparatus for peeling off set forth in the claim 1, wherein said convex portions have a shape which is getting thinner toward an axis along a circumference.

## Patentansprüche

1. Schälvorrichtung, mit
einer Öffnung, durch welche Wasser eingeführt wird,
einem Zylinder, der eine Mehrzahl von Schälklingen umfasst, die auf seiner Innenseite in einer Reihe angebracht sind,
einer drehenden Bodenplatte, welche auf dem Zylinder angeordnet ist und welche einander entgegengesetzte konvexe Abschnitte aufweist, die auf einem Teilstück um eine Achse herum ausgebildet sind, und einem Vorsprung, der auf der Oberfläche der Bodenplatte drehbar angebracht ist,
einem Motor, der auf dem unteren Teil der drehenden Bodenplatte angebracht ist, um die drehende Bodenplatte vor- und zurück zu drehen,
einem Auslass, der mit dem Zylinder verbunden ist, um das nach dem Schälen verbleibende Wasser und die Schalen herauszulassen,
und einer Austragungsöffnung zum Herausziehen von im Zylinder verbliebenden Materialien,
wobei, wenn ein Motor betätigt wird, nachdem das Wasser und die Materialien in den Zylinder eingegeben worden sind, das Wasser und die Materialien entsprechend den Drehungen der drehenden Bodenplatte am Umfang des Zylinders entlang gedreht werden und die Klingen und die Materialien während der Drehung des Wasser und der Materialien in Berührung kommen und dadurch die Schalen abgeschält werden.

2. Schälvorrichtung nach Anspruch 1, ferner mit,
einer Steuertafel zum Steuern der Betriebsbedingungen einschließlich wenigstens einer Drehzahl und des Zeitintervalls zwischen einer Vorwärtsdrehung und einer Rückwärtsdrehung des Motors.

3. Vorrichtung einer Schälvorrichtung nach Anspruch 1, in welcher die konvexen Abschnitte eine Form haben, welche in Richtung einer Achse entlang eines Um-fangs dünner wird.

## Revendications

1. Appareil d'épluchage, comprenant,
une ouverture à travers laquelle l'eau est introduite, un cylindre comportant une pluralité de lames destinées à l'épluchage montées en une rangée sur le côté intérieur de celui-ci,
une plaque inférieure rotative qui est agencée sur le cylindre, et qui comporte des parties convexes opposées formées sur une partie autour d'un axe, et une protubérance installée en rotation sur la surface de la plaque inférieure,
un moteur monté sur la partie inférieure de la plaque inférieure rotative pour faire tourner la plaque inférieure rotative vers l'avant et inversement,
une sortie connectée au cylindre pour évacuer l'eau résiduelle et les épluchures après l'épluchage,
et une ouverture d'évacuation destinée à retirer les matières résiduelles à l'intérieur du cylindre,
dans lequel si un moteur est actionné après l'introduction de l'eau et des matières dans le cylindre, on fait tourner l'eau et les matières le long de la circonférence du cylindre selon les rotations de la plaque inférieure rotative, et pendant la rotation de l'eau et des matières, les lames et les matières sont mises en contact et ainsi, les épluchures sont enlevées.

2. Appareil d'épluchage selon la revendication 1, comprenant en outre,
un panneau de commande destiné à commander les conditions de fonctionnement comportant au moins un temps de rotation, et l'intervalle de temps entre une rotation vers l'avant et une rotation inverse dudit moteur.

3. Appareil d'épluchage selon la revendication 1, dans lequel lesdites parties convexes ont une forme qui s'amincit vers un axe le long d'une circonférence.
